# EUROPÄISCHE PATENTSCHRIFT

(11) **EP 2 236 868 B1**
(45) Veröffentlichungstag und Bekanntmachung des Hinweises auf die Patenterteilung: **16.10.2013**
(21) Anmeldenummer: 10156674.3
(22) Anmeldetag: 16.03.2010
(51) Int. Cl.: F16J 15/32, F01D 11/00

(54) **Lamellendichtung für eine Strömungsmaschine**
Leaf seal for a turbo machine
Joint lamelles pour turbomachines

(30) Priorität: 31.03.2009 DE 102009015122
(43) Veröffentlichungstag der Anmeldung: 06.10.2010
(73) Patentinhaber: Alstom Technology Ltd, 5400 Baden (CH)
(72) Erfinder: Ambrosy, Günter, 5404 Baden-Dättwil (CH); Höbel, Matthias, 5210 Windisch (CH); Vogt, Ernst, 5236 Remigen (CH); Hafner, Josef, 5444 Künten (CH)
(74) Vertreter: Dimper, Dieter

(56) Entgegenhaltungen:
- EP-A1- 1 013 975
- WO-A1-2005/095829
- WO-A1-2005/103534
- WO-A1-2006/061324
- DE-A1-102008 021 116

## Beschreibung

### TECHNISCHES GEBIET

Die vorliegende Erfindung bezieht sich auf das Gebiet der Strömungsmaschinen, insbesondere solche mit grossen Rotordurchmessern, wie stationäre Gas- oder Dampfturbinen, aber auch auf Strahltriebwerke. Sie betrifft eine Lamellendichtung gemäss dem Oberbegriff des Anspruchs 1.

### STAND DER TECHNIK

Eine Gasturbine besteht aus einem Rotor, auf dem verschiedene Stufen mit Verdichterschaufeln und Turbinenschaufeln angebracht werden, sowie einem Statorgehäuse. Der Rotor wird an jedem Ende der Rotorwelle in Lagern montiert.

Die Steuerung des Gasstroms innerhalb der Gasturbine ist von überragender Bedeutung im Hinblick sowohl auf die Funktionalität als auch die Effektivität der Gasturbine. Von herausragender Bedeutung ist in diesem Zusammenhang die Verhinderung von Leckageströmungen des Arbeitsfluids. So sind an verschiedenen Stellen entlang der Rotorwelle Dichtungen angeordnet, um einen axialen Leckagestrom des Arbeitsfluids entlang der Welle wenigstens zu verringern. Besondere Bedeutung kommt einer Dichtung nahe den Lagern zu, um zu verhindern, dass sich das Schmiermittel des Lagers durch den heissen Fluidstrom überhitzt.

Es können drei Technologien üblicher Dichtungen unterschieden werden: Labyrinthdichtungen, Bürstendichtungen und Lamellendichtungen.

Labyrinthdichtungen haben keinen oder kaum Metall-Metall-Kontakt zwischen dem Rotor und dem Stator; daher ist ihr Dichtungseffekt verhältnismäßig klein. Jedoch bieten sie den Vorteil der niedrigen Rotationsreibung und daher einer hohen Lebensdauer.

Bürstendichtungen andererseits haben höhere Reibungsverluste wegen der Reibung zwischen den Borstenenden und der Rotorwelle. Dies hat eine Abnutzung zur Folge, welche die Lebensdauer der Dichtung begrenzt. Die Bürstendichtungen bieten jedoch eine bessere Hemmung des axialen Gasstroms, besonders bei höheren axialen Druckdifferenzen.

Lamellendichtungen haben gegenüber den beiden anderen Technologien das Potential, die Dichtungsleistung deutlich zu verbessern. Anstelle der bei den Bürstendichtungen eingesetzten Vielzahl dünner Bürstendrähte verwenden Lamellendichtungen eine Vielzahl dünner Metalllamellen, um den Spalt zwischen stationären und rotierenden Turbinenkomponenten abzudichten. Dabei werden ähnlich kleine Leckagen wie bei Bürstendichtungen erreicht. Durch die veränderte Geometrie der flexiblen Dichtungselemente und ihre erhöhte Steifigkeit in axialer Richtung können Lamellendichtungen aber bei deutlich höheren Druckdifferenzen eingesetzt werden. Dies erlaubt es gegenüber den anderen Technologien, Dichtungen mit kompakteren Abmessungen zu erstellen. Zudem bewirkt ein geeignetes Lamellendesign die Ausbildung vorteilhafter hydrodynamischer Effekte ("Blow-up" Effekt), was sich in einem verminderten Verschleissverhalten niederschlägt und damit zu einer längeren Lebensdauer führt in einer Grössenordnung, die mit Bürstendichtungen nicht erreichbar sind.

Aus der EP 933567 ist das grundlegende Design einer Lamellendichtung bekannt. Anstelle der Borsten aus Drähten mit kreisförmigem Querschnitt werde dünne Metalllamellen oder -blätter in einem kontrollierten Abstand untereinander und in einem definierten Winkel zum Radius angeordnet. Die Lamellen, die mit ihren Flächen im wesentlichen parallel zur axialen Richtung orientiert sind, sind in der axialen Richtung viel steifer als in Umfangsrichtung. So kann die Dichtung höheren Druckdifferenzen widerstehen, ohne dabei deren Möglichkeiten zum Zulassen von Radialbewegungen einzuschränken. Auch bietet der breite Bereich auf dem Rotor, der von den Spitzen der Lamellen überstrichen wird, die Gelegenheit, während des Betriebes eine hydrodynamische Kraft zu erzeugen, welche die Lamellenspitzen von der Welle trennen kann. Auf diese Weise kann ein minimaler Abstand erzeugt und beibehalten werden, so dass die Abnutzung, die Reibungshitze und die Reibungsverluste sehr gering gehalten werden.

Der Spalt zwischen den Lamellen ist ein kritischer Designparameter: Er ermöglicht das Auftreten eines Fluidstroms, um damit den hydrodynamischen Effekt zu erzeugen; er darf aber nicht so groß sein, um einen übermässigen axialen Leckstrom zu erlauben.

Gemäss der in WO 2006061324 vorgestellten Erfindung besitzen die Lamellen zur Einstellung des Abstands zwischen aufeinanderfolgenden Lamellen der Lamellendichtung Distanzelemente, und umfassen die Mittel zur Positionierung und Halterung der Lamellen einen oder mehrere seitlich abstehende Ausleger an den Lamellen im Bereich der Distanzelemente. Insbesondere wird das Handling der Lamellen und deren Zusammenstellung zu Lamellenpaketen dadurch weiter verbessert, dass die Ausleger bezüglich einer in Längsrichtung verlaufenden Mittellinie der Lamellen asymmetrisch ausgebildet sind. Die Asymmetrie kann dadurch erreicht werden, dass nur auf einer Seite ein Ausleger vorgesehen ist. Es ist aber auch denkbar, dass zwei gegenüberliegende Ausleger vorgesehen sind, die seitlich unterschiedlich weit abstehen. Weiterhin kann eine Asymmetrie dadurch herbeigeführt werden, dass zwei gegenüberliegende Ausleger vorgesehen sind, die sich in Längsrichtung gesehen auf unterschiedlichen Höhen befinden. Zur Einstellung eines Abstands zwischen aufeinanderfolgenden Lamellen in der Lamellendichtung sind vorzugsweise Distanzelemente vorgesehen; die Ausleger sind dabei im Bereich der Distanzelemente angeordnet. Die Distanzelemente können als integrale Elemente an den Lamellen als Bereiche grösserer Dicke ausgebildet oder als separate Elemente ausgebildet sein.

Abhängig von der gewählten Geometrie für die Dichtung und von dem Durchmesser der zu dichtenden Welle kann die Anzahl der Lamellen je Dichtung in die Tausende gehen. Daraus folgt zwangsläufig, dass die Genauigkeit, mit der diese hergestellt, zusammengebaut und verbunden werden können, wobei ein reproduzierbarer Spalt zwischen jedem Paar von Lamellen sicherzustellen ist, ein kritischer Faktor für die erfolgreiche Implementierung jedes möglichen Dichtungsdesigns ist. Eines der Grundprobleme bei der Herstellung einer Lamellendichtung ist eben die Schwierigkeit, diese Vielzahl von Lamellen in einer vorgegebenen Konfiguration mit den erforderlichen niedrigen Toleranzen zusammenzubauen. Kritische Elemente sind vor allem die Masshaltigkeit des Winkels w1 zwischen Rotoroberfläche und Lammellenachse und der schmale Spalt zwischen den Lamellen.

Ebenso kritisch ist der Fügeschritt, bei dem Tausende solcher Lamellen fest mit einer Trägerstruktur verbunden werden. WO 2005095829 schlägt in diesem Zusammenhang den Einsatz eines innovativen Lötverfahrens zur Fertigung von Lamellendichtungen vor. Durch Einsatz spezieller Lötfolie wird eine Super-Soliduslötung realisiert, bei der die Lötfolie weitgehend im festen Zustand verbleibt und daher kein Lot in die freizuhaltenden Zwischenräume zwischen den Lamellen eindringt. Die eingelegte Hartlötfolie dient gleichzeitig als Distanzelement und definiert den Abstand zwischen benachbarten Lamellen. Hierdurch wird eine sichere Verbindung zwischen den Lamellen bei gleichzeitiger Einhaltung eines präzisen Abstandes erreicht.

Alternativ schlägt WO 2005103534 die Fertigung einer Lamellendichtung mittels eines Schweissverfahrens vor. Die Lamellen werden derart ausgebildet und innerhalb der Lamellendichtung angeordnet, dass sie an den Seitenkanten entlang wenigstens einer sich über mehrere Lamellen erstreckenden Berührungslinie unmittelbar oder über dazwischenliegende Distanzelemente aneinanderstossen. Entlang diesen seitlichen Berührungslinien werden die Schweissverbindungen sowohl zur Verbindung der Lamellen untereinander als auch mit dem Gehäuse geführt. Zur Festlegung eines definierten Spalts zwischen benachbarten Lamellen werden entweder separate Distanzelemente eingesetzt oder die einzelnen Lamellen werden im Bereich der Berührungslinie mit einer grösseren Dicke oder besonderen Ausprägungen ausgerüstet.

Ein weiteres Problem für die Implementierung einer solchen Dichtung stellt die Einbauproblematik dar, dergestalt, dass ein als einteilig ausgeführter Lamellendichtring nicht über das Wellenende hinweg an seine vorgesehene Position geschoben werden kann. Deshalb muss ein Lamellendichtring, wie in EP 1013975 offenbart, wenigstens zweiteilig ausgeführt werden, um am Einbauort zu einem homogenen Dichtring zusammengefügt zu werden, ohne dass die Grundstruktur und die Wirkungsweise der Dichtung negativ beeinträchtigt oder gar unterbrochen wird. Diese Problematik ist bislang noch nicht zufriedenstellend gelöst worden.

### DARSTELLUNG DER ERFINDUNG

Der Erfindung liegt die Aufgabe zugrunde, die vorgenannten Nachteile einer Lamellendichtung weitgehend zu vermeiden und eine Geometrie der Dichtungslamellen vorzuschlagen, welche es erlaubt, Einzelmodule oder komplette Dichtungen durch einfaches Zusammenstecken der beteiligten Komponenten verlässlich zu fixieren, so dass anschliessend die Komponenten durch ein Fügeverfahren, beispielsweise durch ein Lötverfahren gemäss WO 2005095829, verzugsfrei miteinander verbunden werden können.

Die Aufgabe wird durch die Gesamtheit der Merkmale der unabhängigen Ansprüche gelöst. Der Kern der Erfindung besteht darin, Dichtung oder Dichtungsmodul aus einem exakt zusammenpassenden Paar von Lamelle und Trägerplatte zu realisieren. Sowohl der Einbauwinkel w1 als auch die Spalte zwischen den Lamellen werden dabei durch präzise geschnittene, leicht keilförmige Taschen in der Trägerplatte mit hoher Genauigkeit vorgegeben. Die Taschen sind dabei stets so orientiert, dass jede einzelne Lamelle exakt unter dem vom Design vorgegebenen Winkel w1 zur Rotoroberfläche steht. Jede einzelne Lamelle besitzt eine zugehörige Tasche in der Trägerplatte. Dabei erfolgt bei der Bestückung der Lamellen in die Trägerplatte eine eindeutige Zuordnung und damit Sicherstellung der Lagegenauigkeit durch formschlüssiges Einstecken der Lamellen in die Taschen in der Trägerplatte. Zur möglichst guten Fixierung und Führung der Dichtungslamellen in der Trägerplatte sind erstere mit passenden Seitenarmen versehen, die in die präzise und individuell für jeden Lamellenseitenarm ausgeschnittenen Taschen der Trägerplatte eingreifen. Hierfür sind die Seitenarme derart mit einem definierten Untermass ausgerüstet, dass sie exakt in die geschnittenen Taschen passen. Für eine möglichst gute Fixierung und Führung der einzelnen Lamellen wird der Seitenarm zu diesem Zwecke in einer Länge ausgebildet, die maximal der Materialdicke der Trägerplatte entspricht. Dies deshalb, um einerseits eine zuverlässige Fixierung und Führung zu gewährleisten, andererseits aber zu vermeiden, dass er über die Trägerplatte hinaussteht, um ein Nacharbeiten durch Abfräsen überstehender Teile zu vermeiden.

Auf diese Weise kann eine Vielzahl von Lamellen durch ein einfaches Einstecken in die Trägerplatte für die später erfolgende Fügeoperation fixiert werden. Mit dieser Methode werden sowohl die Spalte zwischen den Lamellen als auch die Einbauwinkel mit hoher Wiederholgenauigkeit und Masshaltigkeit realisiert.

Eine sandwichartige Fixierung der Lamellen zwischen zwei Trägerplatten wird erleichtert, indem die Lamelle auf der anderen Seite nur mit einem einzigen Seitenarm ausgerüstet ist. Auch bei geringen erlaubten Toleranzen ist es dank der exakten Positionierung der gesteckten Lamellen möglich, eine aus Lamellenpackung und Trägerplatten gebildete Sandwichstruktur herzustellen.

Ein weiterer entscheidender Aspekt der Lamellengeometrie berücksichtigt die zu einem späteren Zeitpunkt vorgesehene Fügeoperation, durch die das Sandwich aus Lamellenpackung und Trägerplatte fest miteinander verbunden wird. Diese erfolgt vorzugsweise durch Hochtemperaturlöten, da auf diese Weise die Deformation des Moduls minimiert wird. Durch Verwendung spezieller Lötfolie, deren Löttemperatur auf die Materialien der Lamellen und Trägerplatten abgestimmt ist, resultiert die Möglichkeit, die Verbindung als Super-Soliduslötung zu realisieren, bei der die Lötfolie weitgehend im festen zustand verbleibt und daher kein Lot in die freizuhaltenden Zwischenräume in dem Mittelbereich der Lamellen dringt.

Als besonders vorteilhaft hat es sich erwiesen, wenn die Lötfolie aus einer Hochtemperaturlegierung ausgewählt wird, die Super-Soliduslöten in einem Temperaturbereich erlaubt, in dem gleichzeitig residueller mechanischer Stress in den Einzelkomponenten abgebaut wird, und diese Komponenten dabei bleibend deformiert werden können. Dies kann zur exakten Ausrichten der radial inneren Lamellenspitzen und der genauen Einstellung des inneren Radius genutzt werden. Diese verzugsfreie Fügeoperation in einem Schritt reduziert den Herstellungsaufwand beträchtlich und resultiert in Dichtungsmodulen, die ohne jede weitere Bearbeitung in eine Strömungsmaschine, beispielsweise Gasturbine, eingebaut werden können.

Nach einer besonders bevorzugten Ergänzung der erfindungsgemässen Lösung wird eine Kombination verschiedener Lamellenbauformen innerhalb einer Lamellendichtung oder eines Lamellendichtungsmoduls vorgeschlagen. Der damit einhergehende technische Vorteil liegt darin begründet, dass es auf diese Weise möglich ist, einzelne Lamellenmodule in einer frei bestimmbaren Bogenlänge herzustellen.

Beide Lamellenbauformen unterscheiden sich dabei in ihrer unterschiedlichen Anzahl von Seitenarmen sowie in deren asymmetrischer Anordnung bzw. Relativlage zueinander.

Die Bereiche um die einzelnen Seitenarme sind mit einer Aussparung versehen, in die vor oder bei dem Bestückungsvorgang eine Lötfolie eingelegt wird, um in dem nachgeschalteten Lötprozess, vorzugsweise einem Hartlötprozess, insbesondere einem Super-Soliduslötprozess, wie an anderer Stelle bereits erwähnt, die Lamellen stoffschlüssig in ihrer Position mit den Trägerplatten zu verbinden.

Sowohl bei der Handmontage als auch bei der automatisierten Montage wird die Zusammenstellung der Lamellen zu Lamellenpaketen und deren Weiterverarbeitung zur fertigen Lamellendichtung erleichtert, vereinfacht und mit erhöhter Präzision durchführbar gemacht.

Die erfindungsgemässe veränderte Geometrie der Dichtungslamellen gestattet es, Einzelmodule oder komplette Dichtungen durch einfaches Zusammenstecken der Einzelteile verlässlich zu fixieren und durch anschliessendes Hochtemperaturlöten verzugsfrei miteinander zu verbinden. Daraus resultiert eine kosten- und zeitoptimierte Fertigung. Und es schafft die Grundlage für die Produktion von Lamellendichtungen grossen Durchmessers, bei denen Lamellen in einer Grössenordnung von mehreren Tausend Stück in sehr engen dimensionalen Toleranzen verarbeitet werden.

Es gestattet die präzise und gleichzeitig wirtschaftliche Fertigung der Einzelkomponenten durch leicht verfügbare und bewährte Fertigungstechnologien, wie Laserschneiden, Stanzen oder fotochemisches Ätzen.

Es erlaubt die Herstellung von Lamellendichtungen bzw.

Lamellendichtungsmoduln durch verzugsfreies permanentes Verbinden der Einzelteile auf Endmass.

Der überragende Vorteil des kombinierten Einsatzes unterschiedlicher Bauformen von Lamellen innerhalb einer Dichtung oder eines Dichtungsmoduls besteht darin, dass es nunmehr gelingt, modular aufgebaute mehrteilige Dichtringe ohne signifikanten Unterbruch in der Lamellenfolge zu erstellen.

Werden zwei unterschiedlich strukturierte Lamellentypen in alternierender Reihenfolge in die Trägerplatte bestückt, so bietet der Bereich zwischen den wechselnden Lamellentypen genügend Anbindungsquerschnitt, um eine Segmentierung des Lamellenmoduls vorzunehmen. Gerade dieser exakte Trennschnitt ermöglich grundsätzlich die Generierung von Lamellenmodulen mit einer frei zu wählenden Bogenlänge als Grundmodul zur Erstellung eines mehrteiligen Lamellendichtrings.

Die Segmentierung ermöglicht neben einer kostenoptimierten Fertigung vor allem die Generierung eines sich selbst stabilisierenden und zentrierenden mehrteiligen Lamellendichtrings ohne störende Unterbrechung der Lameltendichtfunktion und ist somit ein Schlüssel für die Integration von Lamellendichtungen in rotierende Strömungsmaschinen.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: in einer perspektivischen Seitenansicht den typischen Aufbau einer Lamellendichtung gemäss Stand der Technik, wie sie bei einer Gasturbine Anwendung findet;
- Fig. 2: in der Seitenansicht in Achsrichtung die in radialer Richtung im Winkel w1 geneigte Anordnung der Lamellen mit dazwischen liegenden Distanzelementen gemäss Stand der Technik;
- Fig. 3a,b,c: eine Bauform einer einzelnen Lamelle mit asymmetrisch angeordneten Seitenarmen;
- Fig. 4a,b,c: Anordnung der taschenförmigen Aussparungen in der Trägerplatte, in welche die Seitenarme der Lamellen eingreifen;
- Fig. 5a,b: Darstellung zweier unterschiedlicher Bauformen von Lamellen, die innerhalb eines Moduls kombiniert werden;
- Fig. 6: Seitenansicht einer teilweise bestückten Trägerplatte mit Lamellen unterschiedlicher Bauformen;
- Fig. 7: Stosssituation zweier Lamellenmodule;
- Fig. 8a,b,c: Stosssituation zweier Lamellenmodule in einer alternativen Ausführungsart mit einer zwischen den Modulen Formschluss erzwingenden Abdeckplatte;
- Fig. 9: Anordnung von Lamellendichtungssegmenten in einer Gehäusehalbschale.

### WEGE ZUR AUSFÜHRUNG DER ERFINDUNG

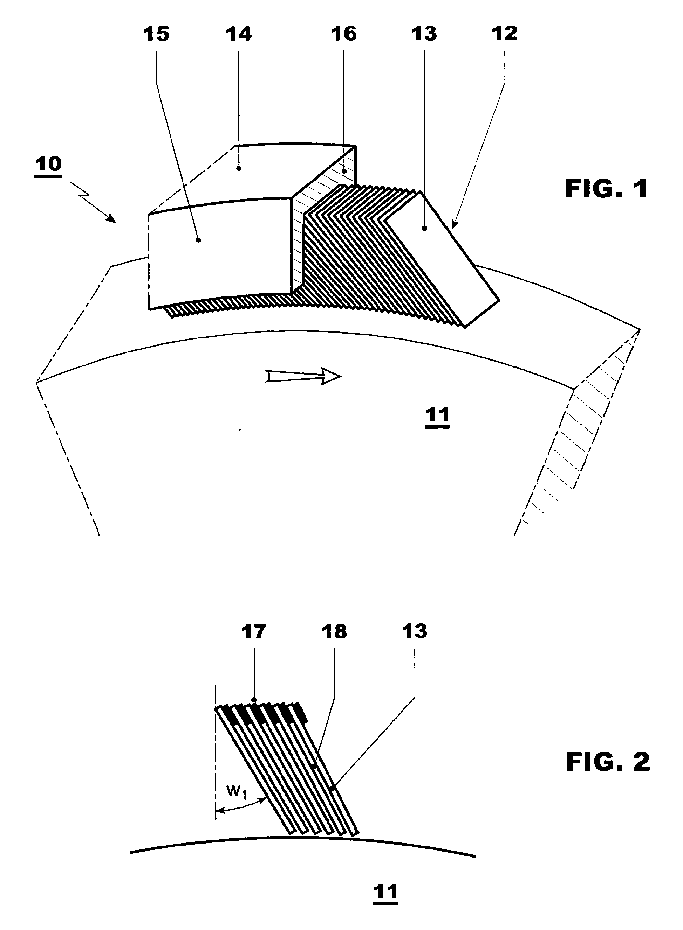

Die Figuren 1 und 2 geben den nächstliegenden Stand der Technik wieder. In Fig. 1 ist in einer perspektivischen Seitenansicht der typische Aufbau einer Lamellendichtung dargestellt, wie sie beispielsweise bei einer Gasturbine (10) Anwendung findet. Die Lamellendichtung (12) dichtet eine in Pfeilrichtung rotierende Rotorwelle 11 der Gasturbine (10) gegen ein Gehäuse (14). In dem kreisringförmigen Zwischenraum zwischen der Rotorwelle (11) und dem Gehäuse (14) besteht die Lamellendichtung (12) im Wesentlichen aus einem Paket von eng voneinander beabstandeten dünnen Lamellen (13), angeordnet innerhalb einer Trägerstruktur (15, 16). Die Lamellen (13) sind mit ihrer Fläche im Wesentlichen parallel zur Rotationsachse der Turbine orientiert. Wie aus Fig. 2 erkennbar, sind die Lamellen (13) um einen Winkel w1 aus der Radialen gekippt. Zwischen den einzelnen Lamellen (13) bildet sich jeweils ein schmaler Spalt bzw. Zwischenraum (18), der gemäss dem Stand der Technik durch zwischen den Lamellen (13) angeordnete Distanzelemente (17) festgelegt ist. Dabei können die Distanzelemente (17) als separate Elemente ausgebildet sein; sie können aber auch in die Lamellen (13) integriert sein.

Die Endplatten (15) und (16), welche die Lamellen (13) in einem Teil ihrer radialen Erstreckung stromauf und stromab begrenzen, erfüllen mehrere Funktionen. Zum einen beeinflussen sie die Wirkung des Fluidstroms auf die Dichtungslamellen (13) und zum anderen dienen sie der Fixierung und Führung derselben.

Von besonderer Wichtigkeit für die Handhabung und Positionierung der einzelnen Lamellen (13) und ihre Zusammenstellung zu einem eine Lamellendichtung (12) bildenden Lamellenpaket sind an die Lamellen (13) angeformte Mittel zur Führung und Fixierung der Lamellen (13) in der Trägerstruktur (15, 16). Gemäss den Figuren a), b), c) in Zeichnung 3 sind die Lamellen (13) mit asymmetrisch angeformten Tragarmen (19, 20, 21) ausgestattet, die in dem Fixierungsbereich (22) der Lamelle (13) seitlich an den zwei gegenüberliegenden Schmalseiten (23, 24) der Lamelle (13) abstehen. Die Tragarme (19, 20, 21) erleichtern die Zusammenstellung der Lamellen (13) in der Trägerstruktur (15, 16). Die Tragarme (19, 20, 21) erlauben in Wechselwirkung mit komplementär ausgebildeten Taschen (25, 26) in den gegenüber stehenden Endplatten (15, 16) eine definierte Positionierung in radialer und tangentialer Richtung und gewährleisten die Einhaltung des vorgegebenen Kippwinkels w1 der Lamellen (13).

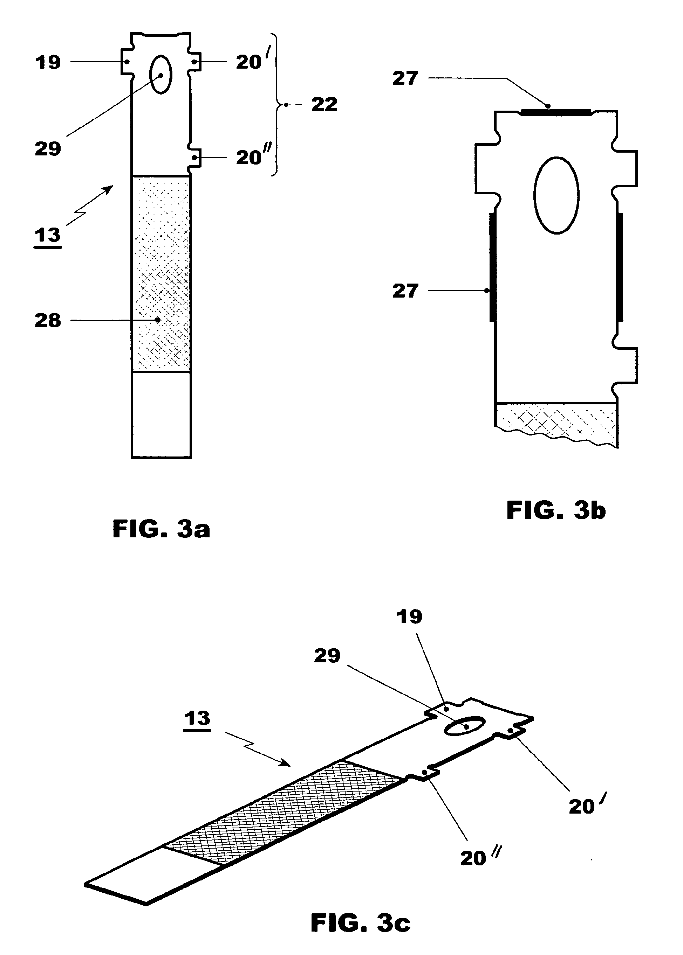

Bei der in den Figuren 3a) bis c) dargestellten Ausführungsart besitzt die Lamelle (13) auf der einen Seite zwei Tragarme (20', 20") und auf der anderen Seite einen einzigen Tragarm (19). Indem der Abstand zwischen den beiden Armen (20') und (20") möglichst gross gewählt wird, folgt daraus eine hohe Genauigkeit bei der Einstellung des Kippwinkels w1. In den Zwischenraum zwischen den beabstandeten Tragarmen (20') und (20") kann vorzugsweise eine Lötfolie (27) für die spätere stoffschlüssige Verbindung mit der Trägerstruktur (15, 16) eingelegt werden. Auf der gegenüber liegenden Seite ist die Lamelle (13) nur mit einem Tragarm (19) ausgestattet. Dies erleichtert die sandwichartige Fixierung der Lamelle (13) zwischen den Trägerplatten (15) und (16). Auch bei geringen zulässigen Toleranzen ist es dank der exakten Positionierung der gesteckten Lamellen (13) möglich, eine aus Lammellenpackung (13) und Trägerplatten (15, 16) gebildete Sandwichstruktur herzustellen.

Ein weiterer entscheidender Aspekt der Lamellengeometrie berücksichtigt die zeitlich nachgelagerte Fügeoperation, durch die das Sandwich aus Lamellenpackung (13) und Trägerplatten (15, 16) fest miteinander verbunden wird. Die Fügeoperation erfolgt vorzugsweise durch Hochtemperaturlöten, da auf diese Weise eine Deformation des Moduls verhindert wird. Durch Verwendung einer Lötfolie (27), deren Löttemperatur auf die Materialien der Lamellen (13) und Trägerplatten (15, 16) abgestimmt ist, kann eine Super-Soliduslötung realisiert werden, bei der die Lötfolie (27) weitgehend im festen Zustand verbleibt. Eine verzugsfreie Fügeoperation in einem einzigen Schritt reduziert den Herstellungsaufwand beträchtlich und resultiert in Dichtungsmodulen, die ohne jede weitere Bearbeitung in eine Gasturbine eingebaut werden können.

Wie weiterhin aus den Figuren 3a) und c) erkennbar ist, besitzen die Lamellen (13) einen mittleren Bereich (28) verringerte Materialdicke (in Figur 3a schraffiert dargestellt). Die verringerte Dicke im Mittelbereich (28) der Lamelle (13) erhöht deren radiale Elastizität und verbessert damit Anwendungseigenschaften der damit ausgerüsteten Lamellendichtung (12).

Zur erleichterten Montage ist die Lamelle (13) mit einer Mittelbohrung (29) versehen, um den Einsatz eines Führungsdrahts als Montagehilfe zu ermöglichen. Die Bohrung (29) besitzt eine elliptische Querschnittsform, deren Achsenverhältnis von dem Kippwinkel w1 bestimmt wird.

Flache Aussparungen an den Aussenkanten der Lamelle (13) dienen der Einlage von passend vorgefertigter Lötfolie (27) für die spätere stoffschlüssige Verbindung mit der Trägerstruktur (15, 16).

Einer der Gründe für die asymmetrische Ausformung und Anordnung der Seitenarme (19, 20, 21) liegt darin, dass eine solche Geometrie zwingend nur einen passgenauen Einbau zulässt und bei manuellem oder automatischem Zusammenbau einzelne falsch liegende Lamellen (13) sofort erkennen lässt, ihr Einbau von vornherein verunmöglicht ist.

Gemäss Figuren 3a-c ist die Asymmetrie dadurch erzeugt, dass auf einer Seite der Lamelle (13) ein Tragarm (19) vorgesehen ist, wohingegen auf der anderen Seite der Lamelle (13) zwei Tragarme (20', 20") gleicher oder unterschiedlicher Form und Dimension vorgesehen sind. Zwei gegenüber liegende Tragarme (19, 20, 21) können in unterschiedlicher oder gleicher Höhe angeordnet sein.

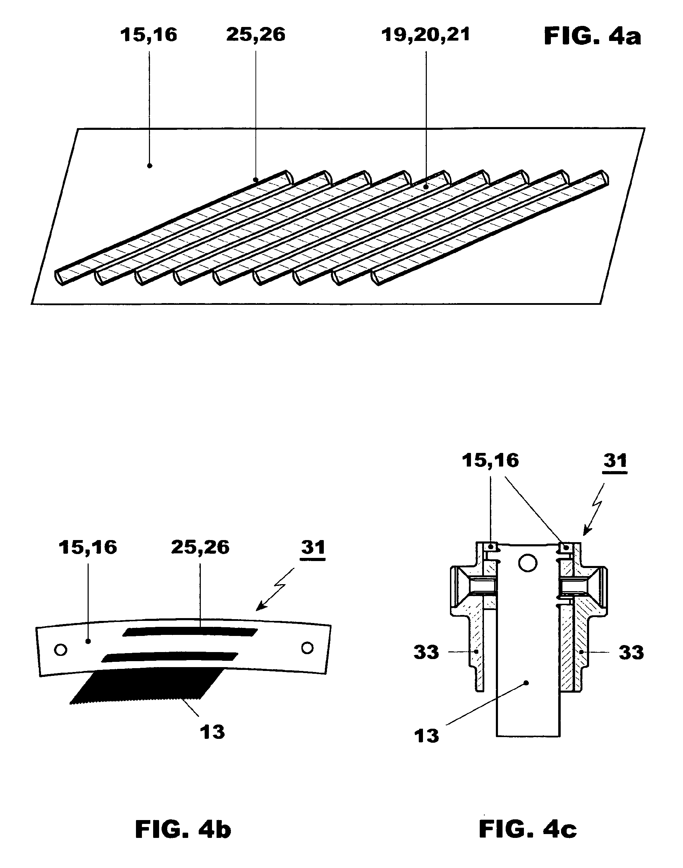

Figur 4 zeigt die an die Lamellengeometrie angepasste Form der Trägerplatten (15, 16) und die Anordnung der einzelnen Lamellen (13) durch einfaches Einstecken in komplementäre Aussparungen (25, 26) der Trägerplatten (15, 16). Es ist offensichtlich, dass eine äusserst präzise Fertigung sowohl dieser Aussparungen (25, 26) wie auch der Lamellen (13) eine Grundbedingung für die Montage und die Funktionsfähigkeit der Dichtung (12) ist. Die Herstellungstoleranzen der Einzelkomponenten liegen daher in einem Bereich von 0,01 mm.

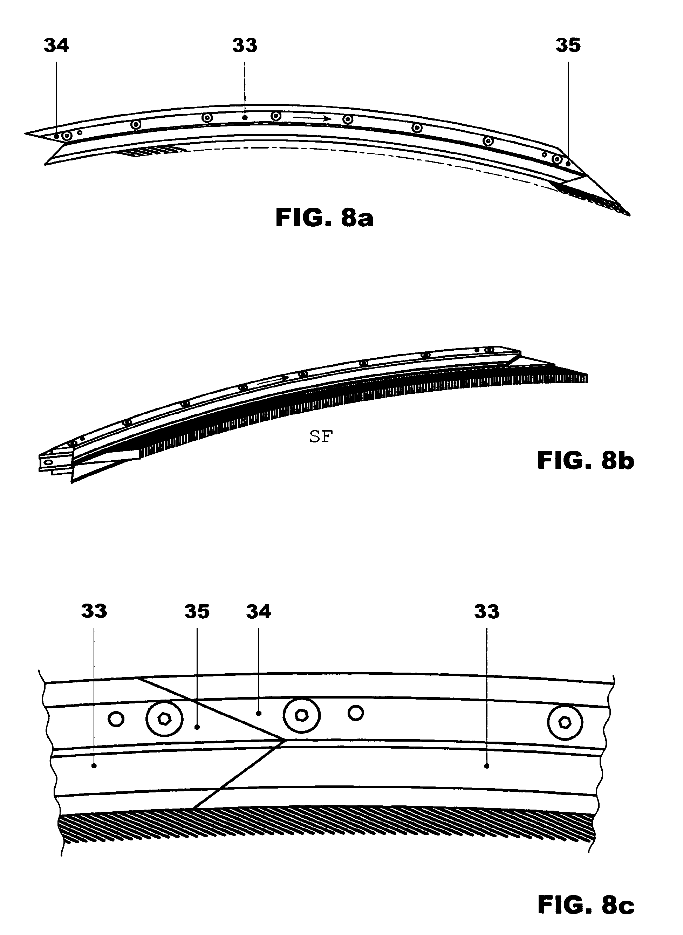

Zur Gewährleistung einer ausreichenden Stabilität ist eine gewisse Mindestdicke der Trägerplatten (15, 16) erforderlich. Diese Voraussetzung ist ohne weiteres zu meistern, indem die Taschen (25, 26) durch Laserschneiden mit optimierten Prozessparametern und dem Schneidprozess angepassten Bahngeometrien gefertigt werden. Hierbei wird die programmierte Bahnkurve für das Schneiden so ausgelegt, dass beim Schneiden abrupte Richtungsänderungen an den Fixationspunkten der Lamellen (13) vermieden werden. Figur 4 zeigt Taschen (25, 26) der Trägerplatten (15, 16) mit eingelegten Lamellen (13). Wie in Figur 4a zu sehen, sind zwar die einzelnen Taschen (25, 26) miteinander verbunden, winzige zahnartige Ausbuchtungen fixieren aber die Tragarme (19, 20, 21) jeder einzelnen Lamelle (13) zuverlässig. Bei Lamellen (13) mit durchgehend gleichbleibender Dicke oder solchen, bei denen die radial gegenüber liegenden Endbereiche eine gleiche Dicke aufweisen, verlaufen die Spalte (18) zwischen den einzelnen Lamellen (13) leicht keilförmig, da sich nach der Montage beide Längsenden der Lamellen (13) an radial unterschiedlichen Positionen befinden. Die Taschen (25, 26) sind daher radial innen in einer Grössenordnung von beispielsweise Hundertstel Millimetern enger beieinander als radial aussen. Alternativ können die Lamellen (13) vom Fixierungsbereich in Richtung auf das radial innen liegende Ende hin eine abnehmende Dicke aufweisen, woraus in etwa gleichbleibende Spalte (18) resultieren. Figur 4b veranschaulicht ein Lamellendichtungssegment bzw. -modul (31) in seiner Grundausstattung, bestehend aus gegenüberliegend positionierten Trägerplatten (15, 16) mit in die Taschen (25, 26) eingehängten und verlöteten Lamellen (13). In Figur 4c ist ein solches Dichtungssegment (31) in einer Seitenansicht wiedergegeben. Gegenüber dem in Figur 4b skizzierten Modul unterscheidet es sich dadurch, dass auf die Trägerplatten (15, 16) noch zusätzlich Abdeckplatten (33) aufgebracht, beispielsweise aufgeschraubt, sind. Wie nachfolgend im Zusammenhang mit Figur 8 beschrieben wird, dienen die Abdeckplatten (33) der Stabilisierung und insbesondere der gegenseitigen Justierung der Dichtungssegmente (31, 32) im Einbauzustand.

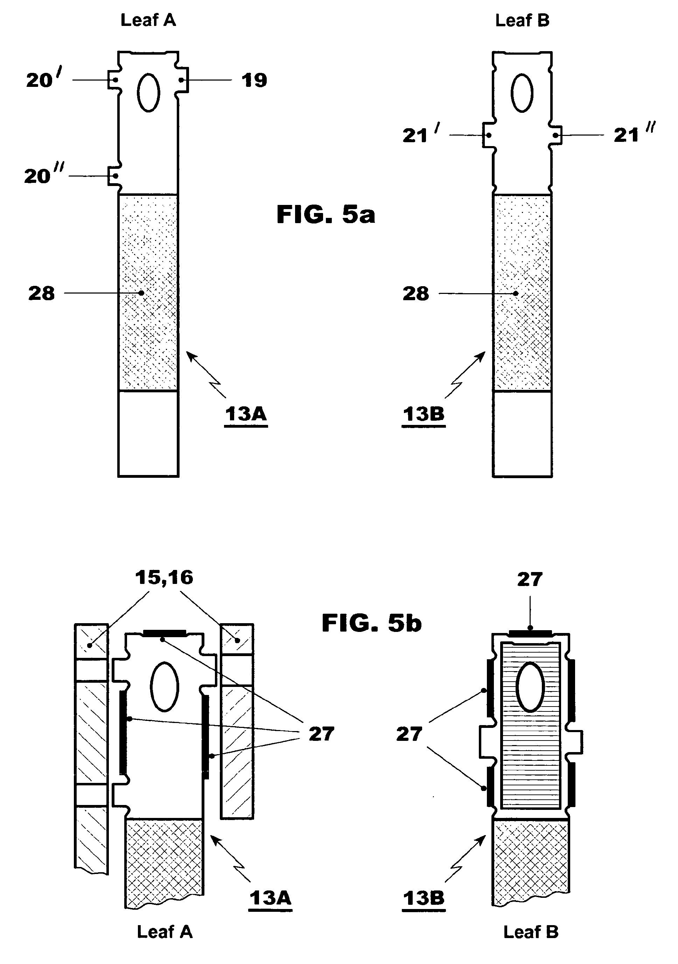

Figur 5 stellt eine bevorzugte ergänzende Ausführungsart der Erfindung vor, nach der innerhalb einer Lamellendichtung (12) zwei unterschiedlich ausgeformte Typen von Lamellen (13) kombiniert werden. Die Unterschiede liegen in der konkreten Ausbildung des Fixierungsbereichs (22) der Lamellen (13). Die in Figur 5 dargestellten Lamellentypen A und B unterscheiden sich in der Anzahl der Seitenarme (19,20, 21) sowie deren asymmetrischer Anordnung bzw. Relativposition zueinander. Lamellen (13) des vorstehend in den Figuren 3 beschriebenen Lamellentyps A mit drei asymmetrisch angeordneten Seitenarmen (19, 20', 20") werden innerhalb ein und desselben Dichtungsrings (12) bzw. Moduls eines solchen Dichtungsrings (12) in einer Kombination mit Lamellen (13) des Typs B mit nur zwei Seitenarmen (21',21") eingesetzt, wobei sich die kombinierten Lamellentypen A und B zumindest in der Anordnung der Seitenarme (19, 20, 21) unterscheiden.

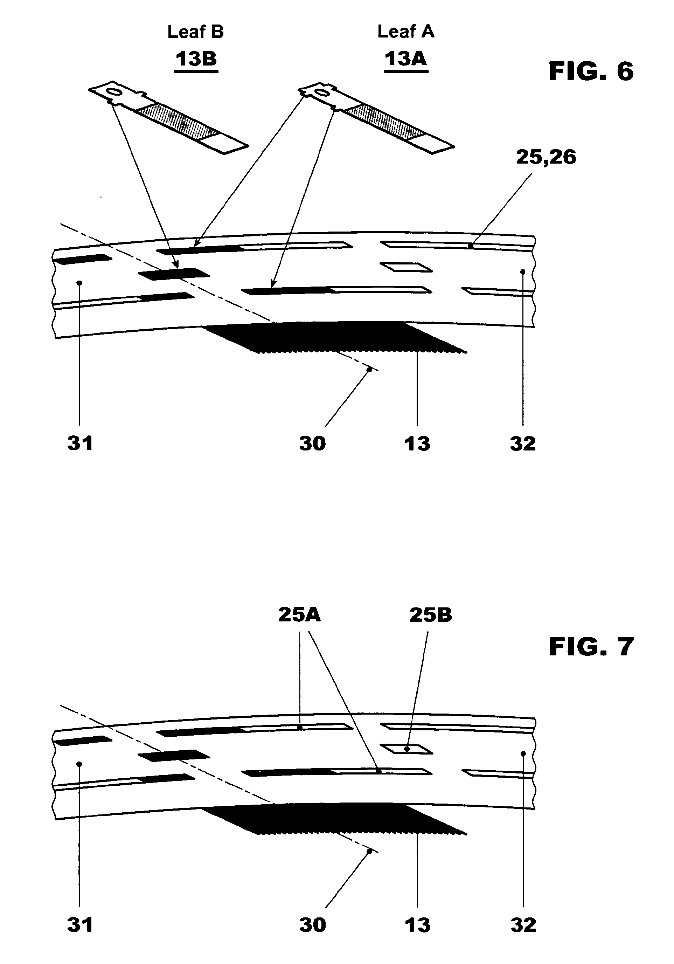

Aus Figur 6 wird eine Möglichkeit der Kombination der unterschiedlichen Lamellentypen A und B deutlich. Aus dieser Figur und der darauf Bezug nehmenden Erläuterung werden insbesondere die mit einer solchen Massnahme einhergehenden Vorteile deutlich hervortreten. Die beiden unterschiedlich ausgeprägten Lamellentypen A und B werden gruppenweise in alternierender Anordnung in die Trägerstruktur (15, 16) eingebracht. Über die Länge eines Dichtungsmoduls wechseln sich damit innerhalb des Lamellenpakets gruppenweise Lamellen (13) der Typen A und B ab. Selbstverständlich bedarf es hierfür einer dementsprechenden Ausbildung der Trägerstruktur (15, 16), insbesondere der Aussparungen (25, 26) derselben. Entlang den Endplatten (15, 16) entstehen somit in Umfangsrichtung hintereinander erste Bereiche parallel verlaufender Taschen (25A, 26A) zur Aufnahme des ersten Lamellentyps A und zweite Bereiche mit anders angeordneten Taschen (25B, 26B) zur Aufnahme der Tragarme des zweiten Lamellentyps B, wobei die jeweiligen den A- und der B-Bauform entsprechenden Taschen (25A, 25B) und (26A, 26B) in radial unterschiedlichen Bereichen der Trägerplatten (15, 16) angeordnet sind.

Diese beschriebene Vorgehensweise ermöglicht die Herstellung einzelner, exakt abgelängter Lamellengrundmodule, die später in einer Turbine (10) oder anderen rotierenden Maschine zu einem Vollkreis zusammengesetzt werden können. An den Stossstellen tritt keine merkliche Unterbrechung in der Lamellenfolge auf. Die exakte Ablängung eines Segments erfolgt durch einen Trennschnitt (30) durch die Trägerstruktur (15, 16) hindurch parallel zu dem Kippwinkel w1 der Lamellenanordnung, wie in Fig. 6 dargestellt. Erst die Kombination von Lamellen (13) mit unterschiedlich angeordneten und ausgeformten Tragarmen (19, 20, 21) in alternierender Reihenfolge erlaubt eine Segmentierung des Lamellenmoduls, ohne dass dabei die mechanische Integrität der entstehenden Segmente (31, 32) negativ betroffen ist. Bei einer Ausführung eines Dichtungsmoduls mit Lamellen (13) von durchgehend einheitlicher Haltestruktur hätte eine Ablängung oder Segmentierung ein Auseinanderfallen der Endplatten (15, 16) zur Folge, sofern nicht über die Taschen (25, 26) hinweg für eine Materialbrücke gesorgt ist. Aber wie aus der Fig. 6 ohne weiteres erkennbar ist, verbleiben aufgrund der alternierenden Anordnung unterschiedlicher Lamellentypen A und B stets hinreichende Anbindungsquerschnitte innerhalb der Endplatten (15, 16), so dass auch nach einer Längenteilung die mechanische Integrität der Segmente (31, 32) erhalten bleibt.

In der beispielhaften Ausführungsart gemäss Fig. 6 werden die unterschiedlichen Lamellentypen A und B derart angeordnet, dass der Trennschnitt (30) im Bereich des Lamellentyps B mit beidseitig nur einem Tragarm (21', 21 ") erfolgt. In dem Bereich des Trennschnitts (30) werden die Lamellen (13) untereinander verbunden, um eine zusätzliche Festigkeit einzubringen und ein Herauslösen von Lamellen (13) an dieser Stelle zu verhindern. Dies kann vorzugsweise dadurch geschehen, dass im Fixierungsbereich (22) auf der einer benachbarten Lamelle (13) zugewandten Oberfläche Lötfolie (27) aufgebracht wird (siehe Fig. 5b), um eine innige und stabile Verbindung zwischen benachbarten Lamellen (13) zu erzeugen und damit an dieser Stelle das spätere exakte Trennen entlang des Kippwinkels w1 zuverlässig zu ermöglichen.

Allein die Zusammenstellung einer Anzahl solcher Dichtungssegmente (31, 32) zu einem geschlossenen Dichtungsring innerhalb der Strömungsmaschine ist mit dem Problem einer zunächst mangelhaften Zentrierung und Stabilisierung behaftet. Nach einer vorteilhaften Ergänzung der Erfindung wird daher vorgeschlagen, die Lamellenmodule (31, 32) mit Abdeckplatten (33) zu versehen, welche passgenau wenigstens auf eine der Endplatten (15, 16) der Segmente (31, 32) aufgesetzt werden. Dabei fällt den Abdeckplatten (33) die Aufgabe einer gegenseitigen Stabilisierung und Zentrierung der zusammengesetzten Segmente (31, 32) zu.

In einer besonders vorteilhaften Weiterführung der Erfindung wird angeregt, diese Abdeckplatten (33) mit pfeilförmig ausgebildeten Enden (34, 35) in einer solchen Weise auszurüsten, dass durch einen erzwungenen Formschluss benachbarter Abdeckplatten (33) eine Selbstzentrierung und stabile Verbindung erreicht wird, wie dies aus Fig. 8 hervorgeht. Anstelle der dargestellten pfeilförmigen Ausbildung der Enden (34, 35) sind auch alternative Formgebungen denkbar, die durch eine komplementäre Ausbildung aufeinanderstossender Enden (34, 35) einen stabilen Formschluss erzwingen. Hier seien beispielhaft nur zickzack-, zahn- oder wellenförmig ineinandergreifende Ausprägungen der Enden (34, 35) genannt.

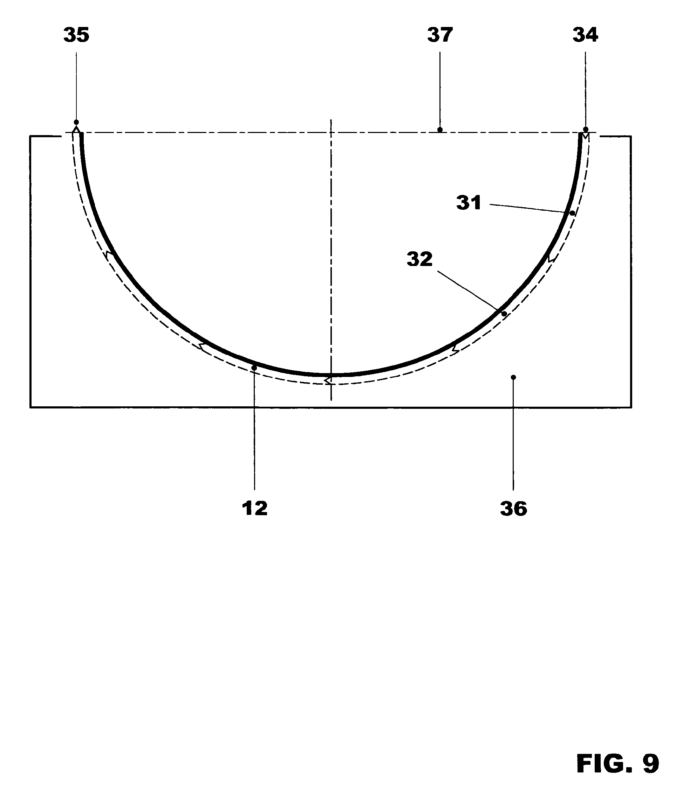

Für eine Montage an der Strömungsmaschine bietet sich vorteilhaft eine Aufteilung der ringförmigen Lamellendichtung (12) in eine geradzahlige Anzahl von Segmenten (31, 32) dergestalt an, dass sich die Teilungsebene des Dichtungsrings (12) mit derjenigen der Gehäuseschalen (36), bei Strömungsmaschinen sind dies in der Regel eine untere und eine obere Halbschale, deckt. Aus Figur 9 ist eine solche vorteilhafte Anordnung von Dichtungssegmenten (31, 32) in eingebautem Zustand ersichtlich. Die ringförmige Lamellendichtung (12) ist aus beispielsweise zwölf Dichtungssegmenten (31, 32) zusammengesetzt, sechs je Gehäusehalbschale (36). Figur 9 zeigt nur die untere Halbschale (36). Die Dichtungssegmente (31, 32) sind in eine Gehäusenut eingelassen. Durch geeignete Befestigungsmittel wenigstens im Bereich der Trennebene (37) sind die Segmente (31, 32) jeder Halbschale (36) in ihrer Einbaulage fixiert. Zu erkennen ist ein Überstand der Lamellendichtung (12) aus der Trennebene (37) heraus, der aus der pfeilförmigen Ausbildung des Endes (35) der Deckplatte (33) resultiert.

### BEZUGSZEICHENLISTE

- 10: Strömungsmaschine
- 11: Rotor
- 12: Lamellendichtung
- 13: Lamelle
- 14: Gehäuse
- 15: Endplatte
- 16: Endplatte
- 17: Distanzelement
- 18: Spalt
- 19: Tragarm
- 20: Tragarm
- 21: Tragarm
- 22: Fixierungsbereich der Lamelle (13)
- 23: Schmalseite von (13)
- 24: Schmalseite von (13)
- 25: Aussparung/Tasche in (15)
- 26: Aussparung/Tasche in (16)
- 27: Lötfolie
- 28: mittlerer Bereich von (13)
- 29: Mittelbohrung
- 30: Trennschnitt
- 31: Segment von (12), Dichtungsmodul
- 32: Segment von (12), Dichtungsmodul
- 33: Abdeckplatte
- 34: pfeilförmiges Ende
- 35: pfeilförmiges Ende
- 36: Gehäuseschale
- 37: Trennebene der Strömungsmaschine
- w1: Winkel

## Patentansprüche

1. Lamellendichtung (12) zum Abdichten einer um eine Achse rotierenden Welle, insbesondere in einer Strömungsmaschine, beispielsweise Dampfturbine oder Gasturbine, welche Lamellendichtung (12) eine Vielzahl von untereinander beabstandete Lamellen (13) umfasst, die in einem konzentrischen Kreis um die Achse herum angeordnet und in ihrer Position fixiert sind, wobei die Lamellen (13) mit ihren Flächen im wesentlichen parallel zu der Achse orientiert sind und in einem Fixierungsbereich (22) mittels Haltemitteln in Form abstehender Tragarme (19, 20, 21) in eine Trägerstruktur eingebunden sind, die zumindest zwei gegenüber liegende Endplatten (15, 16) umfasst, **dadurch gekennzeichnet, dass** in die zumindest zwei gegenüber liegenden Endplatten (15, 16) individuell für jeden Tragarm (19, 20, 21) ausgeschnittene Taschen (25, 26) eingeformt sind, in die die komplementär ausgeformten, von den Lamellen (13) abstehenden Tragarme (19, 20, 21) passgerecht eingreifen.

2. Lamellendichtung (12) nach Anspruch 1, **dadurch gekennzeichnet, dass** die Tragarme (19, 20, 21) bezüglich einer in Längsrichtung der Lamellen (13) verlaufenden Linie asymmetrisch ausgebildet sind.

3. Lamellendichtung (12) nach Anspruch 2, **dadurch gekennzeichnet, dass** sich die Tragarme (19, 20, 21) in Längsrichtung der Lamellen (13) gesehen auf unterschiedlichen Höhen befinden.

4. Lamellendichtung (12) nach Anspruch 2, **dadurch gekennzeichnet, dass** die Lamellen (13) beiderseits eine unterschiedliche Anzahl von Tragarmen (19, 20, 21) aufweisen.

5. Lamellendichtung (12) nach Anspruch 1, **dadurch gekennzeichnet, dass** die Dichtung (12) modulartig aufgebaut ist, dergestalt, dass eine Anzahl von wenigstens zwei Dichtungssegmenten (31, 32) zu einem geschlossenen Ring zusammengesetzt ist.

6. Lamellendichtung (12) nach Anspruch 5, **dadurch gekennzeichnet, dass** innerhalb eines Dichtungssegments (31, 32) wenigstens zwei unterschiedliche Typen von Lamellen (13) angeordnet sind, die sich zumindest in der Anordnung der Tragarme (19, 20, 21) unterscheiden.

7. Lamellendichtung (12) nach Anspruch 6, **dadurch gekennzeichnet, dass** die unterschiedlichen Typen von Lamellen (13) Tragarme (19, 20, 21) in radial unterschiedlicher Position aufweisen.

8. Lamellendichtung (12) nach Anspruch 6, **dadurch gekennzeichnet, dass** die unterschiedlichen Typen von Lamellen (13) in Gruppen und in alternierender Reihenfolge angeordnet sind, wobei eine Gruppe jeweils mehr als eine Lamelle (13) umfasst.

9. Lamellendichtung (12) nach Anspruch 5, **dadurch gekennzeichnet, dass** auf zumindest eine der Endplatten (15, 16) eines Dichtungssegments (31, 32) eine Abdeckplatte (33) aufgebracht ist, deren Enden (34, 35) derart ausgebildet sind, dass sie zu den Enden (34, 35) der Abdeckplatte (33) des jeweils benachbarten Dichtungssegments (31, 32) derart komplementär ausgebildet sind, dass ihr Formschluss eine gegenseitige Stabilisierung und Zentrierung erzwingt.

10. Lamellendichtung (12) nach Anspruch 9, **dadurch gekennzeichnet, dass** die Enden (34, 35) der Abdeckplatte (33) pfeilförmig ausgebildet sind, welche in komplementär pfeilförmig ausgeprägte Enden (34, 35) des jeweiligen benachbarten Dichtungssegments (31, 32) formschlüssig eingreifen.

11. Lamellendichtung (12) nach Anspruch 1, **dadurch gekennzeichnet, dass** die Lamellen (13) im Fixierungsbereich (22) Aussparungen zum Einlegen von Lötfolie (27) aufweisen.

## Claims

1. Lamellar seal (12) for sealing a shaft which rotates around an axis, especially in a turbomachine, for example a steam turbine or gas turbine, which lamellar seal (12) comprises a multiplicity of lamellae (13) which are spaced one beneath the other, arranged in a concentric circle around the axis, and fixed in their position, wherein the lamellae (13) by their surfaces are oriented essentially parallel to the axis and in a fixing region (22) are incorporated into a carrier structure by means of retaining means in the form of projecting support arms (19, 20, 21), which carrier structure comprises at least two oppositely-disposed end plates (15, 16), **characterized in that** in the at least two oppositely-disposed end plates (15, 16), individually cut out for each support arm (19, 20, 21), there are formed pockets (25, 26) in which the complementarily formed support arms (19, 20, 21), which project from the lamellae (13), engage in a snugfitting manner.

2. Lamellar seal (12) according to Claim 1, **characterized in that** the support arms (19, 20, 21) are asymmetrically formed with regard to a line which extends in the longitudinal direction of the lamellae (13).

3. Lamellar seal (12) according to Claim 2, **characterized in that** the support arms (19, 20, 21) are located at different heights, as seen in the longitudinal direction of the lamellae (13).

4. Lamellar seal (12) according to Claim 2, **characterized in that** the lamellae (13) have a different number of support arms (19, 20, 21) on both sides.

5. Lamellar seal (12) according to Claim 1, **characterized in that** the seal (12) is constructed in a modular-like manner in such a way that a number of at least two seal segments (31, 32) are assembled to form a closed ring.

6. Lamellar seal (12) according to Claim 5, **characterized in that** at least two different types of lamellae (13), which at least differ in the arrangement of the support arms (19, 20, 21), are arranged within a seal segment (31, 32).

7. Lamellar seal (12) according to Claim 6, **characterized in that** the different types of lamellae (13) have support arms (19, 20, 21) in a radially different position.

8. Lamellar seal (12) according to Claim 6, **characterized in that** the different types of lamellae (13) are arranged in groups and in alternating sequence, wherein a group comprises more than one lamella (13) in each case.

9. Lamellar seal (12) according to Claim 5, **characterized in that** on at least one of the end plates (15, 16) of a seal segment (31, 32) a cover plate (33) is attached, the ends (34, 35) of which are formed in such a way that they are formed complementarily to the ends (34, 35) of the cover plate (33) of the respectively adjacent seal segment (31, 32) in such a way that their form-fit forces mutual stabilizing and centering.

10. Lamellar seal (12) according to Claim 9, **characterized in that** the ends (34, 35) of the cover plate (33) are formed in the shape of an arrow, which engage in a form-fitting manner in complementarily arrow-shaped ends (34, 35) of the respective adjacent seal segment (31, 32).

11. Lamellar seal (12) according to Claim 1, **characterized in that** the lamellae (13) in the fixing region (22) have recesses for inserting soldering foil (27).

## Revendications

1. Joint à lamelles (12) pour l'étanchéité d'un arbre tournant autour d'un axe, en particulier dans une turbomachine, par exemple une turbine à vapeur ou une turbine à gaz, lequel joint à lamelles (12) comprend une pluralité de lamelles (13) espacées les unes des autres qui sont disposées suivant un cercle concentrique autour de l'axe et qui sont fixées en position, les lamelles (13) étant orientées avec leurs surfaces essentiellement parallèlement à l'axe et étant incorporées dans une structure de support dans une région de fixation (22) par le biais de moyens de retenue sous forme de bras de support saillants (19, 20, 21), la structure de support comprenant au moins deux plaques d'extrémité opposées (15, 16), **caractérisé en ce que** dans les au moins deux plaques d'extrémité opposées (15, 16), sont formées des cavités (25, 26) découpées individuellement pour chaque bras de support (19, 20, 21), dans lesquelles viennent en prise avec ajustement serré les bras de support (19, 20, 21) formés de manière complémentaire et faisant saillie depuis les lamelles (13).

2. Joint à lamelles (12) selon la revendication 1, **caractérisé en ce que** les bras de support (19, 20, 21) sont réalisés sous forme asymétrique par rapport à une ligne s'étendant dans la direction longitudinale des lamelles (13).

3. Joint à lamelles (12) selon la revendication 2, **caractérisé en ce que** les bras de support (19, 20, 21), vus dans la direction longitudinale des lamelles (13), se trouvent à des hauteurs différentes.

4. Joint à lamelles (12) selon la revendication 2, **caractérisé en ce que** les lamelles (13) présentent, de chaque côté, un nombre différent de bras de support (19, 20, 21).

5. Joint à lamelles (12) selon la revendication 1, **caractérisé en ce que** le joint (12) est réalisé sous forme modulaire, de telle sorte qu'une pluralité d'au moins deux segments d'étanchéité (31, 32) soit assemblée pour former une bague fermée.

6. Joint à lamelles (12) selon la revendication 5, **caractérisé en ce qu'**à l'intérieur d'un segment d'étanchéité (31, 32) sont disposés au moins deux types différents de lamelles (13), lesquels se distinguent au moins par l'agencement des bras de support (19, 20, 21).

7. Joint à lamelles (12) selon la revendication 6, **caractérisé en ce que** les différents types de lamelles (13) présentent des bras de support (19, 20, 21) dans une position radialement différente.

8. Joint à lamelles (12) selon la revendication 6, **caractérisé en ce que** les différents types de lamelles (13) sont disposés en groupes et en succession alternée, un groupe comprenant un chaque fois plus d'une lamelle (13).

9. Joint à lamelles (12) selon la revendication 5, **caractérisé en ce que** sur au moins l'une des plaques d'extrémité (15, 16) d'un segment de joint (31, 32) est montée une plaque de recouvrement (33), dont les extrémités (34, 35) sont réalisées de telle sorte qu'elles soient complémentaires aux extrémités (34, 35) de la plaque de recouvrement (33) du segment de joint (31, 32) respectivement adjacent, de telle sorte que leur engagement positif provoque une stabilisation et un centrage mutuels.

10. Joint à lamelles (12) selon la revendication 9, **caractérisé en ce que** les extrémités (34, 35) de la plaque de recouvrement (30 3) sont réalisées en forme de flèches, qui viennent en prise par engagement positif dans des extrémités (34, 35) gaufrées en forme de flèches de manière complémentaire du segment de joint (31, 32) respectivement adjacent.

11. Joint à lamelles (12) selon la revendication 1, **caractérisé en ce que** les lamelles (13) présentent, dans la région de fixation (22), des évidements pour l'insertion d'une feuille de brasage (27).
